# EUROPEAN PATENT SPECIFICATION

(11) **EP 4 308 821 B1**
(45) Date of publication and mention of the grant of the patent: **30.07.2025**
(21) Application number: 22709683.1
(22) Date of filing: 28.02.2022
(51) Int. Cl.: F15B 15/06

(54) **PIVOT ACTUATOR**
SCHWENKSTELLGLIED
ACTIONNEUR À PIVOT

(30) Priority: 19.03.2021 DE 102021106884
(43) Date of publication of application: 24.01.2024
(73) Proprietor: bar-pneumatische Steuerungssysteme GmbH, 53547 Dattenberg (DE)
(72) Inventor: KRÖLL, Markus, 53547 Dattenberg (DE); KUHN, Axel, 56589 Niederbreitbach (DE)
(74) Representative: Barker Brettell LLP
(86) International application number: PCT/EP2022/055024
(87) International publication number: WO 2022/194528

(56) References cited:
- WO-A1-2010/063515
- DE-A1- 102004 004 897
- KR-B1- 102 030 788
- US-A1- 2021 080 023

## Description

The invention relations to a pivot actuator including a housing, a piston that is supported in the housing and displaceable along a longitudinal axis of the housing, a drive shaft that protrudes from the housing, wherein the piston engages the drive shaft by form locking so that the drive shaft is pivoted about a drive axis by a pivot angle between two end positions by a displacement of the piston; and a switching cam that is fixed torque proof at the drive shaft and configured to contact a stop element at the housing with a respective contact surface of the switch cam in the two end positions.

A generic pneumatic pivot actuator is known e.g. under the product designation Keystone Figure 89 by Emerson Electric Co. St. Louis, MI/US. The known pivot actuator has a pivot angle of 90 degrees. The known pivot actuator includes a disc shaped switching cam with two radial protrusions that are arranged mirror symmetrically about the drive shaft. Both end positions are respectively adjustable by a pivot angle of 10 degrees by threading the stop elements in the disc plane into the housing or out of the housing. The protrusions contact respective end surfaces of the stop elements with S-shaped contact surfaces of the protrusions in the end positions. DE102004004897 and WO2010063515 describe different embodiments of rotary drive devices.

### OBJECT

It is an object of the invention to configure the pivot angle continuously variable.

### SOLUTION

Improving upon the known pivot actuator it is proposed according to the invention to configure the switching cam from two discs that are arranged on top of each other along the drive axis, wherein one respective contact surface of the two contact surfaces is arranged at each of the two discs respectively, and wherein the pivot angle can be adjusted by pivoting the two discs relative to each other along the drive axis in different angular orientations. In different pivot actuators, different pivot angles can be implemented by using identical discs. Stocking switching cams for different pivot angles is thus simplified in particular when the discs are identical.

Advantageously the drive shaft in a pivot actuator according to the invention includes a teething wherein the discs are arranged torque proof at the teething. Through the external teething of the drive shaft and a corresponding inner teething of the discs the switching cam is supported torque proof in a particularly simple manner.

Advantageously the teething is rotation symmetrical in a pivot actuator according to the invention. The discs can then be applied to the drive shaft in different angular orientations. When the timing of the teething corresponds to the adjustment angle for the adjustment the end position is adjustable in all intermediary positions between two adjacent positions of the disc. When the adjustment angle is 45 degrees the teething can be 8 times rotation symmetrical.

Advantageously at least one of the end positions is adjustable about the drive axis over an actuation angle of at least 10 degrees in a pivot actuator according to the invention. Advantageously the actuation angle is adjustable in a pivot actuator according to the invention by displacing the stop element along a displacement axis that is arranged transversal to the drive axis, advantageously by threading the stop element about the adjustment axis. Adjusting the end positions, in particular by threading a stop element back and forth is well known in the art.

Advantageously a pivot actuator according to the invention includes spring elements between the housing and the piston wherein the spring elements urge the piston into a neutral position within the pivot angle arrange. Advantageously a pivot actuator according to the invention includes a pressure tight chamber defined within the piston and a fluid connection at the chamber wherein the piston is moveable by loading the fluid connection with a fluid. Spring actuated resetting of the piston of a pivot actuator is well known in the art as well as the loading with a fluid.

Advantageously a pivot actuator according to the invention includes a pressure tight second chamber defined by the piston and a second fluid connection at the second chamber, wherein the piston is moveable back and forth by loading the second fluid connection. Advantageously a pivot actuator according to the invention includes a second piston that is moveable in the housing along a longitudinal axis wherein the second piston engages the drive shaft by form locking so that the drive shaft is pivoted relative to the first piston when the second piston is moved. A double acting piston as well as a pivot actuator with two counter acting pistons is well known in the art.

### EMBODIMENTS

The invention is subsequently described based on embodiments with reference to drawing figures, wherein:
FIG. 1 illustrates a pivot actuator according to the invention;
FIG. 2a/b illustrates two sectional views of the pivot actuator;
FIG. 3a/b illustrates an internal view of the pivot actuator in two end positions;
FIG. 4a illustrates a switching cam of the pivot actuator; and
FIG. 4b illustrates an exploded view of the switching cam.

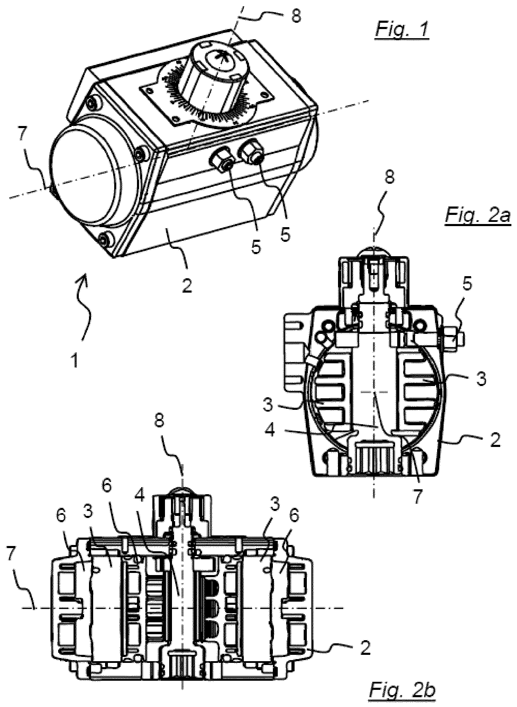

The pivot actuator 1 according to the invention shown in FIGs. 1, 2a/b, 3a/b includes a housing 2, two pistons 3 included in the housing 2 and a drive shaft 4 that protrudes from the housing 2 and two stop elements 5.

The pistons 3 define one pressure tight chamber 6 between each other and two pressure tight chambers 6 in cooperation with the housing 2. The pistons 3 are displaceable in the housing 2 counteracting along a longitudinal axis 7 of the housing 2 and the driveshaft 4 is pivotable about its driveshaft axis 8.

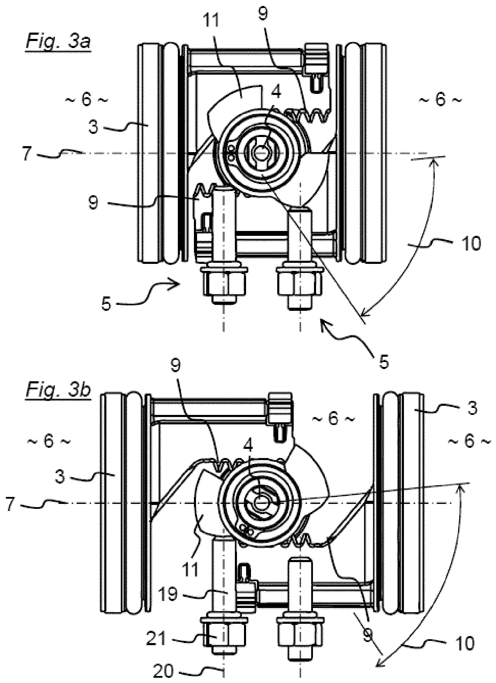

The pistons 3 and the driveshaft 4 include teethings 9 that engage each other by form locking. Loading the chamber 6 through non-illustrated pressure connections at the housing 2 with compressed air moves the pistons 3 and the drive shaft 4 is pivoted by the teethings 9 by a pivot angle 10 between two end positions at 0 degrees and 60 degrees illustrated in FIGs. 3a/b.

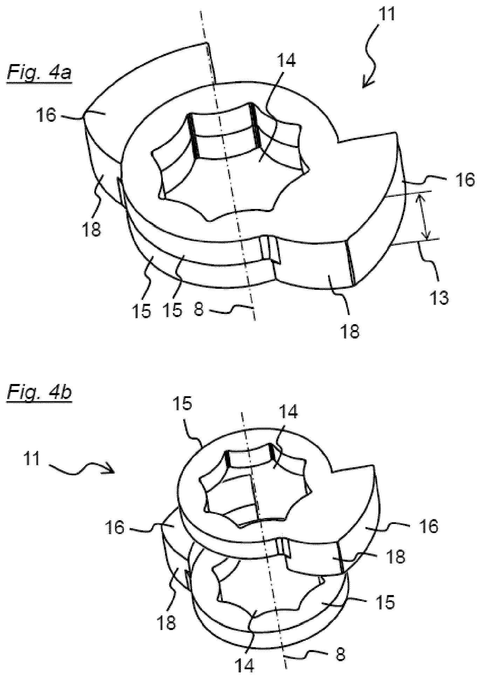

A switching cam 11 is attached at the drive axis 8 in the housing 2 and illustrated in detail in FIGs. 4a/b, and 5. The switching cam 11 has a circular disc shaped base structure with a diameter 12 of 30 mm and a thickness 13 of 9mm and includes an axial receiving opening 14. The receiving opening 14 is shaped as an eight pointed star with rounded corners that fixes the switching cam 11 on the drive shaft 4 through a longitudinal teething.

The switching cam 11 includes two discs 15 that are rotated relative to each other transversal to the drive axis 8 and that are loosely placed on top of each other made from the case-hardened material 1.0503/C45 respectively including a radial protrusion 16 that has a thickness of the switching cam 11 and a radius 17 of 24.5 mm. A respective contact surface 18 is configured at the protrusion 16.

The stop elements 5 respectively include a set screw 19 that is threaded along an adjustment axis 20 into the housing 2 and a locking nut 21 that locks the set screw 19 at the housing 2. The pivot actuator 1 has a nominal pivot angle of 90 degrees.

Two other advantageous pivot actuators differ from the pivot actuator 1 according to the invention only in that one of the discs 15 is pivoted by 45 degrees or 90 degrees about the drive axis compared to the pivot actuator 1 according to the invention. The latter two pivot actuators thus have a nominal pivot angle of 135 degrees or 180 degrees.

### REFERENCE NUMERALS AND DESIGNATIONS

- 1: Pivot Actuator Housing
- 3: Piston
- 2 4: Drive shaft
- 5: Stop element
- 6: Chamber
- 7: Longitudinal axis
- 8: Drive Axis
- 9: Teething
- 10: Pivot Angle
- 11: Switching Cam
- 12: Diameter
- 13: Thickness
- 14: Receiving Opening
- 15: Disc
- 16: Protrusion
- 17: Radius
- 18: Contact Surface
- 19: Set Screw
- 20: Adjustment Axis
- 21: Locking Nut

## Claims

1. A pivot actuator (1), comprising:
a housing (2);
a piston (3) that is supported in the housing (2) and displaceable along a longitudinal axis (7) of the housing;
a drive shaft (4) that protrudes from the housing (2) wherein the piston (3) engages the drive shaft (4) by form locking so that the drive shaft (4) is pivoted about a drive axis (8) by a pivot angle between two end positions through a displacement of the piston; and
a switching cam (11) that is fixed torque proof at the drive shaft (4) and configured to contact a stop element (5) at the housing (2) with a respective contact surface (18) of the switch cam in the two end positions,
**characterized in that** the switching cam (11) includes two discs (15) that are arranged on top of each other along the drive axis (8), wherein one respective contact surface (18) of the two contact surfaces (18) is arranged at each of the two discs (15) respectively, and wherein the pivot angle can be adjusted by pivoting the two discs relative to each other along the drive axis (8) in different angular orientations.

2. The pivot actuator (1) according to claim 1, **characterized in that** the drive shaft (4) includes a teething that supports the discs (15) torque proof.

3. The pivot actuator (1) according to claim 2, **characterized in that** the teething (9) is rotation symmetrical, advantageously eight times rotation symmetrical.

4. The pivot actuator (1) according to one of the preceding claims, **characterized in that** at least one of the end positions is adjustable by an adjustment angle of at least 10 degrees about the drive axis (8).

5. The pivot actuator (1) according to claim 4, **characterized in that** the adjustment angle is adjustable by moving the stop element (5) along an adjustment axis (20) that is oriented transversal to the drive axis (8), advantageously by threading the stop element (5) about the adjustment axis (20).

6. The pivot actuator (1) according to one of the preceding claims, **characterized by** spring elements arranged between the housing and the piston that urge the piston into a neutral position within the pivot angle.

7. The pivot actuator (1) according to one of the preceding claims, **characterized by** a pressure tight chamber (6) that is defined by the piston (3) and a fluid connection arranged at the pressure tight chamber (6) wherein the piston (3) is displaceable by loading the fluid connection with a fluid.

8. The pivot actuator (1) according to claim 7, **characterized by** a second pressure tight chamber (6) defined by the piston (3) and a second fluid connection arranged at the second pressure tight chamber (6) wherein the piston (3) is moveable backward by loading the second fluid connection.

9. The pivot actuator (1) according to one of the preceding claims, **characterized by** a second piston (3) that is displaceable in the housing (2) along the longitudinal axis (7) wherein the second piston engages the drive shaft (4) by form locking so that the drive shaft (4) is pivoted when the second piston (3) is displaced contrary to the first piston (3).

## Patentansprüche

1. Schwenkstellglied (1), Folgendes umfassend:
ein Gehäuse (2);
einen Kolben (3), der in dem Gehäuse (2) abgestützt und entlang einer Längsachse (7) des Gehäuses versetzbar ist;
eine Antriebswelle (4), die aus dem Gehäuse (2) herausragt, wobei der Kolben (3) formschlüssig mit der Antriebswelle (4) in Eingriff steht, sodass die Antriebswelle (4) durch ein Versetzen des Kolbens um eine Antriebsachse (8) um einen Schwenkwinkel zwischen zwei Endpositionen verschwenkt wird; und
einen Schaltnocken (11), der drehfest an der Antriebswelle (4) befestigt ist und konfiguriert ist, um ein Anschlagelement (5) an dem Gehäuse (2) mit einer jeweiligen Kontaktfläche (18) des Schaltnockens in den beiden Endpositionen in Kontakt zu bringen,
**dadurch gekennzeichnet, dass** der Schaltnocken (11) zwei Scheiben (15) beinhaltet, die entlang der Antriebsachse (8) übereinander angeordnet sind, wobei jeweils eine Kontaktfläche (18) der beiden Kontaktflächen (18) an jeweils einer der beiden Scheiben (15) angeordnet ist und wobei der Schwenkwinkel durch Verschwenken der beiden Scheiben relativ zueinander entlang der Antriebsachse (8) in verschiedenen Winkelausrichtungen justiert werden kann.

2. Schwenkstellglied (1) nach Anspruch 1, **dadurch gekennzeichnet, dass** die Antriebswelle (4) eine Verzahnung beinhaltet, die die Scheiben (15) drehfest abstützt.

3. Schwenkstellglied (1) nach Anspruch 2, **dadurch gekennzeichnet, dass** die Verzahnung (9) rotationssymmetrisch, vorteilhafterweise achtfach rotationssymmetrisch ist.

4. Schwenkstellglied (1) nach einem der vorhergehenden Ansprüche, **dadurch gekennzeichnet, dass** mindestens eine der Endpositionen um einen Stellwinkel von mindestens 10 Grad um die Antriebsachse (8) justierbar ist.

5. Schwenkstellglied (1) nach Anspruch 4, **dadurch gekennzeichnet, dass** der Stellwinkel durch Bewegen des Anschlagelements (5) entlang einer quer zu der Antriebsachse (8) ausgerichteten Stellachse (20) justierbar ist, vorteilhafterweise durch Schrauben des Anschlagelements (5) um die Stellachse (20).

6. Schwenkstellglied (1) nach einem der vorhergehenden Ansprüche, **gekennzeichnet durch** zwischen dem Gehäuse und dem Kolben angeordnete Federelemente, die den Kolben innerhalb des Schwenkwinkels in eine neutrale Position drücken.

7. Schwenkstellglied (1) nach einem der vorhergehenden Ansprüche, **gekennzeichnet durch** eine druckdichte Kammer (6), die durch den Kolben (3) definiert ist, und einen an der druckdichten Kammer (6) angeordneten Fluidanschluss, wobei der Kolben (3) durch Beaufschlagen des Fluidanschlusses mit einem Fluid versetzbar ist.

8. Schwenkstellglied (1) nach Anspruch 7, **gekennzeichnet durch** eine durch den Kolben (3) definierte zweite druckdichte Kammer (6) und einen an der zweiten druckdichten Kammer (6) angeordneten zweiten Fluidanschluss, wobei der Kolben (3) durch Beaufschlagen des zweiten Fluidanschlusses nach hinten bewegbar ist.

9. Schwenkstellglied (1) nach einem der vorhergehenden Ansprüche, **gekennzeichnet durch** einen zweiten Kolben (3), der in dem Gehäuse (2) entlang der Längsachse (7) versetzbar ist, wobei der zweite Kolben formschlüssig mit der Antriebswelle (4) in Eingriff steht, sodass die Antriebswelle (4) verschwenkt wird, wenn der zweite Kolben (3) entgegengesetzt zu dem ersten Kolben (3) versetzt wird.

## Revendications

1. Actionneur à pivot (1), comprenant :
un boîtier (2) ;
un piston (3) qui est supporté dans le boîtier (2) et déplaçable le long d'un axe longitudinal (7) du boîtier ;
un arbre d'entraînement (4) qui dépasse du boîtier (2) dans lequel le piston (3) engage l'arbre d'entraînement (4) par verrouillage de forme de sorte que l'arbre d'entraînement (4) pivote autour d'un axe d'entraînement (8) d'un angle de pivotement entre deux positions d'extrémité par un déplacement du piston ; et
une came de commutation (11) qui est fixée en rotation sur l'arbre d'entraînement (4) et configurée pour entrer en contact avec un élément de butée (5) sur le boîtier (2) avec une surface de contact respective (18) de la came de commutation dans les deux positions d'extrémité,
**caractérisé en ce que** la came de commutation (11) comprend deux disques (15) qui sont disposés l'un sur l'autre le long de l'axe d'entraînement (8), une surface de contact respective (18) des deux surfaces de contact (18) étant disposée sur chacun des deux disques (15) respectivement, et l'angle de pivotement pouvant être ajusté en faisant pivoter les deux disques l'un par rapport à l'autre le long de l'axe d'entraînement (8) dans différentes orientations angulaires.

2. Actionneur à pivot (1) selon la revendication 1, **caractérisé en ce que** l'arbre d'entraînement (4) comporte une denture qui supporte les disques (15) de manière solidaire en rotation.

3. Actionneur à pivot (1) selon la revendication 2, **caractérisé en ce que** la denture (9) est symétrique en rotation, avantageusement symétrique en rotation huit fois.

4. Actionneur à pivot (1) selon l'une quelconque des revendications précédentes, **caractérisé en ce qu'**au moins une des positions finales est réglable d'un angle de réglage d'au moins 10 degrés autour de l'axe d'entraînement (8).

5. Actionneur à pivot (1) selon la revendication 4, **caractérisé en ce que** l'angle de réglage est réglable en déplaçant l'élément de butée (5) le long d'un axe de réglage (20) orienté transversalement à l'axe d'entraînement (8), avantageusement en enfilant l'élément de butée (5) autour de l'axe de réglage (20).

6. Actionneur à pivot (1) selon quelconque l'une des revendications précédentes, **caractérisé par** des éléments de ressort disposés entre le boîtier et le piston qui poussent le piston dans une position neutre dans l'angle de pivotement.

7. Actionneur à pivot (1) selon l'une quelconque des revendications précédentes, **caractérisé par** une chambre étanche à la pression (6) qui est définie par le piston (3) et une connexion de fluide disposée au niveau de la chambre étanche à la pression (6), le piston (3) étant déplaçable en chargeant la connexion de fluide avec un fluide.

8. Actionneur à pivot (1) selon la revendication 7, **caractérisé par** une seconde chambre étanche à la pression (6) définie par le piston (3) et une seconde connexion de fluide disposée au niveau de la seconde chambre étanche à la pression (6), le piston (3) étant mobile vers l'arrière en chargeant la seconde connexion de fluide.

9. Actionneur à pivot (1) selon l'une quelconque des revendications précédentes, **caractérisé par** un second piston (3) qui est déplaçable dans le boîtier (2) le long de l'axe longitudinal (7), le second piston s'engageant avec l'arbre d'entraînement (4) par verrouillage de forme de sorte que l'arbre d'entraînement (4) pivote lorsque le second piston (3) est déplacé à l'encontre du premier piston (3).
